# EUROPEAN PATENT SPECIFICATION

(11) **EP 2 172 269 B1**
(45) Date of publication and mention of the grant of the patent: **25.05.2011**
(21) Application number: 09172182.9
(22) Date of filing: 05.10.2009
(51) Int. Cl.: B01L 3/02

(54) **Forensic pipette for wetting and handling sample carriers on the basis of a micro litre pipette tip**
Forensische Pipette zum Anfeuchten und Behandeln von Probenträgern auf Basis einer Mikroliter-Pipettenspitze
Pipette légale pour le mouillage et la manipulation de transporteurs d'échantillons sur la base d'une extrémité de pipette d'un microlitre

(30) Priority: 04.10.2008 DE 202008013219 U
(43) Date of publication of application: 07.04.2010
(73) Proprietor: EPPENDORF AG, 22339 Hamburg (DE)
(72) Inventor: Schmiedl, Dieter Dr., 04626 Schmölln (DE)
(74) Representative: Straus, Alexander

(56) References cited:
- EP-A- 1 382 963
- EP-A- 1 571 437
- DD-A1- 229 941
- DE-U1-202007 001 898
- US-A- 4 602 726
- US-B1- 6 702 990

## Description

### Field of application

The invention relates to a forensic pipette for wetting and handling sample carriers on the basis of a micro litre pipette tip, wherein the sample carrier is provided for securing samples in microbiologic, virologic, genetic, medical, veterinary medical, forensic, criminalistic and technical fields.

The forensic pipette according to the invention and the associated sample carrier are designed as a component of an apparatus system for sampling, identifying, storing and further processing, and providing of samples to be used as evidence, respectively.

### State of the art

In scientific, clinical, veterinary, technical or other research, development or routine laboratories so called micro litre pipette tips of different style and size have been used for many years. Their construction normally depends on the fix volume, the range of volume or on specific applications.

For example DD 229 941 and DE 31 37 423 describe generic pipettes.

All pipettes have in common that they can be tipped/equipped with one or more exchangeable tips depending on the purpose of application. In practice, micro litre pipette tips only serve as pipetting aids. They are in most cases provided for single use and are discharged after use.

Depending on the media to be pipetted and the required accuracy pipettes and their respective tips are constructionally harmonized.

Collecting systems with swabs/cotton wool swabs as actual sample carriers are prevailing in forensics and criminalistics. These systems mostly consist of a shaft/stick made of wood, metal or plastics to which a piece of cotton wool is provided on one or both ends. A sample can be taken by rubbing off or wiping. The sample may then be further processed.

The predominant number of dry or dried samples can or should only be rubbed off with slightly wetted cotton wool carriers. The swab must hence be wetted manually from outside using a sterile water bottle carried along.

Much approved smear test swabs for medical or microbiological purposes only conform to the specific requirements of a DNA analysis when they are immediately dried after use.

The reason for it being that DNA is a sensible analytic material, which degrades quickly under moist storage conditions. Drying of the drawn sample is not uncomplicated, since contaminations by foreign DNA or mixing up of samples must be avoided unconditionally. The original sample will be spoiled after a short time if the cotton wool carrier is not allowed to dry immediately after collecting the sample.

Most of the swabs/cotton wool swabs having a long shaft/stick are normally disposed of in sample glasses or cardboard boxes and then sealed. The required space is disproportionally high when considering that only the small amount of cotton actually functions as sample carrier. Some users therefore break off the front of the swabs used. The thus required predetermined breaking point in the swab stick, however, renders the whole swab mechanically instable.

A further fundamental drawback of conventional sample carriers in form of swabs is that they cannot be directly inscribed and cannot be provided with a barcode, respectively. It is rather accepted to store swabs in labelled test tubes or boxes until further processing. The risk of mixing up samples is thus very high after removal of the swab from its temporary storage.

German utility model DE 20 2007 001 898 for example describes a container and medical swab for biological materials.

The known and widely used swabs/cotton wool swabs have some fundamental drawbacks, which have been already overcome in part by an invention relating to a sample carrier in form of a micro litre pipette tip for securing microbiological, virological, genetical, medical, veterinary medical, forensic, criminalistic and technical samples. Here, a sample collector is positioned directly in the region of the opening at the outlet of a micro litre pipette tip in a manner so that wetting of the sample collector from inside of the micro litre pipette tip through an opening is feasible. A swab tip, a brush tip or a roll covered with tissue, blotting paper or a special carrier or combinations thereof serve as sample collector.

Moreover, this sample carrier provides sufficient space for attaching a barcode, transponder or the like.

The sample carrier described above can be handled analogously to the known swabs. Wetting of the swab in the well known manner from the outside is considered to be out of date and cumbersome. Additionally, there is a risk of contamination.

It would thus be desirable to provide a sample collecting system having a sample carrier on the basis of a micro litre pipette tip which will not exhibit the identified problems when wetting.

### Problem to be solved

The problem to be solved therefore is to be seen in the development of a forensic pipette for wetting and handling of sample carriers of the above described kind on the basis of a micro litre pipette tip.

### Solution to the problem

The problem has been solved by the present invention which provides a forensic pipette for wetting and handling sample carriers on the basis of a micro litre pipette tip having a pipette body composed of screwed together pipette's upper, middle, and lower parts and a syringe inserted into the pipette's middle part, which characterized in that in said screwed state a cannula is guided from the outlet of said pipette's lower part through a screw connection into said pipette middle part and thus into the interior of the syringe body, wherein said connection of the cannula with the interior of the syringe can be established during a screwing operation by piercing the syringe body, in that in the region of the outlet a sample carrier is provided with a sample collector, having the basic shape of a known micro litre pipette tip, and in that the syringe piston is mechanically connected with a fine advancement drive and further with a control element in form of a knurled screw for a dosed force exertion onto the syringe content.

In a further embodiment of the invention the aspiration of fluid into the syringe body is prevented by the apparatus.

In still another embodiment of the invention a discharger is provided for handling the sample carrier.

In order to implement the invention a sample carrier of the above described kind is to be used. The actual sample collector of such sample carrier is directly mounted at the opening of the outlet of the micro litre pipette tip. The sample collector is formed as swab tip, as brush tip for turning up hair, textile fibers, feathers, fuzzes or the like or as a turnable cylindrically formed pipette shoulder being covered with tissue, blotting paper or a special carrier for collecting samples by rolling (roller tip).

Also combinations of two or all mentioned embodiments are feasible. The sample collector can be wetted through said opening from the outside and the inside.

However, relevant for the following text of the present invention is merely the wetting from inside.

The sample carriers formed as micro litre pipette tips can be clipped on simple tip holders, conventional micro litre pipettes or medicinal tips. Moreover, if required they can be stored in properly dimensioned dry tubes. It is also possible to attach a bar code, transponder or the like to the outer surface of the sample carrier.

Such further developed micro litre pipette tips can be applied advantageously for taking forensic or microbiological samples. Additionally, they are suitable for transport and storage for long time periods.

For an optimal handling of the sample carriers it is proposed to initially use constructively adapted pipettes according to the invention for sample collection and -taking.

When being analyzed in the lab the sample carriers can be further processed with conventional micro litre pipettes present in the laboratory without any problem.

For that purpose the forensic pipette according to the invention is designed as described in the following:

The pipette body is normally composed of an upper part, a middle part, and a lower part, wherein these main components may be screwed together.

A syringe is inserted into the pipette's upper part, and the lower part contains a cannula guided through the screw connection up into the region of the syringe. On the opposite side the cannula ends in the outlet of the pipette's lower part.

The sample carrier described in the beginning is arranged to the pipette's lower part, and contains the sample collector.

The direct connection of the cannula with the contents of the syringe can, however, not be established until during the screw operation the syringe body is pierced.

For this purpose corresponding technical and dimensional arrangements are met.

The syringe piston is actively connected to a fine advancement drive, being operable by means of a knurled screw. Thus, the fluid in the syringe body can be conveyed properly dosed via the cannula to the outlet of the pipette's lower part and hence to the sample carrier.

Aspiration of fluid into the syringe body in the reverse direction is prevented by the technical construction of the fine advancement drive.

The forensic pipette according to the invention can, after discharging the sample carrier, be immediately tipped with a new sample carrier and individually wetted. It can thus be used repeatedly, wherein also post-dosing is possible.

The forensic pipette is equipped with a discharger for safe and easy handling. Further advantageous technical features can be implemented.

### Embodiments

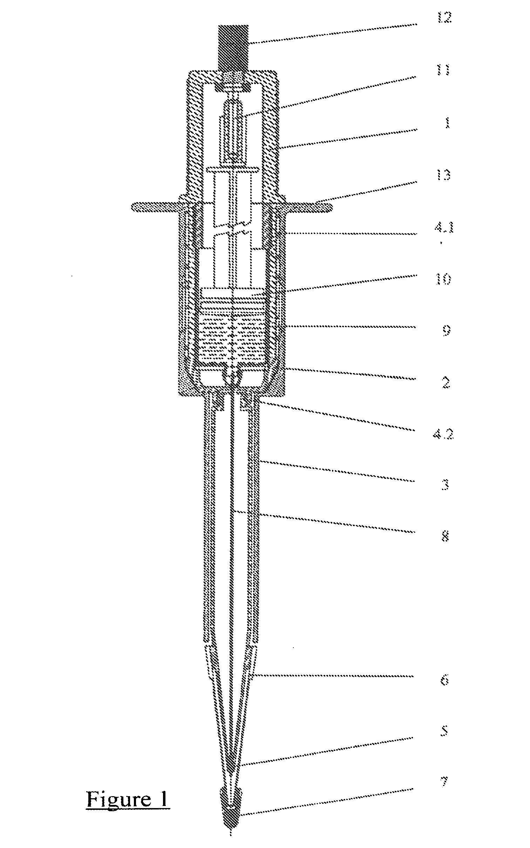

In the following embodiment of the invention a forensic pipette according to the invention is described in more detail by means of a figure (Fig. 1).

### Reference list

- 1: pipette's upper part
- 2: pipette's middle part
- 3: pipette's lower part
- 4.1/4.2: screw connection
- 5: outlet
- 6: sample carrier
- 7: sample collector
- 8: cannula
- 9: syringe body
- 10: syringe piston
- 11: fine advancement drive
- 12: knurled screw
- 13: discharger

The pipette body is formed by the pipette's upper, middle and lower parts, 1, 2 and 3.

The mentioned parts are screwed together. The sample carrier 6 having the sample collector 7 is arranged in the region of outlet 5 of the pipette's lower part 3.

The sample carrier 6 has the basic shape of a known micro litre pipette tip, which is modified as described. In the context of the present invention the precise design of sample carrier 6 will not be addressed.

A syringe is inserted into the pipette's middle part 2. The pipette's lower part 3 contains a cannula 8. In the screwed state said cannula 8 extends into the pipette's middle part 2, whereby a fluid connection from the syringe interior to outlet 5 through screw connection 4.2 and the pipette's lower part can be realized. However, the fluid connection of the syringe body 9 and the cannula 8 cannot be operably established until the pipette's upper and middle parts 1 and 2 are screwed together.

The syringe piston 10 can be operated by means of a knurled screw 12 via a fine advancement drive 11. The latter is constructed in such a way that no fluid can be aspirated into the syringe body 9.

Furthermore, the forensic pipette exhibits a discharger 13 for handling sample carrier 6. Further advantageous technical features can be realized.

Starting with a fluid consumption of approximately 20 µl for each sample collection a fluid syringe having a content of 10 ml must not be exchanged before taking 500 sample collections. This entails efficient working.

It is further referred to the specification.

## Claims

1. Forensic pipette for wetting and handling sample carriers on the basis of a micro litre pipette tip having a pipette body composed of screwed together pipette's upper, middle, and lower parts (1, 2 and 3) and a syringe inserted into the pipette's middle part (2),
**characterized in that** in said screwed state a cannula (8) is guided from an outlet (5) of said pipette's lower part (3) through a screw connection (4.2) into said pipette's middle part (2) and thus into the interior of the syringe body (9), wherein said connection of the cannula (8) with the interior of the syringe can be established during a screwing operation by piercing the syringe body (9),
**in that** in the region of the outlet (5) a sample carrier (6) is provided with a sample collector (7), having the basic shape of a known micro litre pipette tip, and
**in that** said syringe piston (10) is mechanically connected with a fine advancement drive (11) and further with a control element in form of a knurled screw (12) for a dosed force exertion onto the syringe content.

2. The forensic pipette according to claim 1, **characterized in that** an aspiration of fluid into the syringe body (9) is prevent by the apparatus.

3. The forensic pipette according to claim 1, **characterized in that** a discharger (13) is arranged for handling the sample carrier (6).

## Patentansprüche

1. Forensische Pipette zum Befeuchten und Handhaben von Probenträger auf Basis einer Mikroliterpipettenspitze mit einem aus einem Pipettenober-, -mittel- und -unterteil (1, 2 und 3) durch Verschrauben zusammengesetzten Pipettenkörper und einer in das Pipettenmittelteil (2) eingesetzten Spritze,
**dadurch gekennzeichnet, dass** im verschraubten Zustand eine Kanüle (8) vom Auslauf (5) des Pipettenunterteils (3) durch die Schraubverbindung (4.2) hindurch bis in das Pipettenmittelteil (2) und damit bis in den Innenraum des Spritzenkörpers (9) geführt ist, wobei die Verbindung der Kanüle (8) mit dem Innenraum der Spritze während des Einschraubvorgangs durch Anstechen des Spritzenkörpers (9) herstellbar ist,
dass im Bereich des Auslaufs (5) ein mit einer Probenaufnahme (7) versehener Probenträger (6), der die Grundform einer an sich bekannten Mikroliterpipettenspitze aufweist, angeordnet ist, und
dass der Spritzenkolben (10) mit einem Feingangvortrieb (11) und weiter mit einem Bedienelement in Form einer Rändelschraube (12) zur dosierten Druckausübung auf den Spritzeninhalt mechanisch verbunden ist.

2. Forensische Pipette nach Anspruch 1, **dadurch gekennzeichnet, dass** das Einsaugen von Flüssigkeit in den Spritzenkörper (9) apparativ verhindert ist.

3. Forensische Pipette nach Anspruch 1, **dadurch gekennzeichnet, dass** ein Abwerfer (13) zur Handhabung des Probenträgers (6) angeordnet ist.

## Revendications

1. Pipette médicolégale pour le mouillage et la manipulation de supports d'échantillons sur base d'une pipette à pointe microlitre comportant un corps de pipette composé de parties supérieure, médiane et inférieure (1, 2, 3) vissées ensemble et d'une seringue insérée dans la partie médiane (2)
**caractérisée en ce qu'**à l'état vissé, une canule (8) est guidée à partir d'une sortie (5) de ladite partie inférieure (3) de la pipette dans ladite partie médiane (2) au travers d'une vis de connexion (4.2) et de la sorte à l'intérieur du corps de pipette (9), dans laquelle ladite connexion de la canule (8) avec l'intérieur de la seringue peut être établie au cours de l'opération de vissage en perçant le corps de seringue (9),
**en ce qu'**un support d'échantillon (6) est disposé dans la région de la sortie (5), avec un collecteur d'échantillon ayant la forme de base d'une pipette à pointe microlitre connue, et
**en ce que** ledit piston de seringue (10) est connecté mécaniquement à un dispositif d'avancement fin et en outre à un élément de contrôle ayant la forme d'une vis à tête moletée, pour l'exercice d'une force dosée sur le contenu de la seringue.

2. La pipette médicolégale selon la revendication 1 **caractérisée en ce qu'**une aspiration de fluide dans le corps de seringue est évitée par l'appareil.

3. La pipette médicolégale selon la revendication 1 **caractérisée en ce qu'**un déchargeur (13) est aménagé pour la manipulation du support d'échantillon.
